# EUROPEAN PATENT SPECIFICATION

(11) **EP 3 380 307 B1**
(45) Date of publication and mention of the grant of the patent: **26.06.2019**
(21) Application number: 17710384.3
(22) Date of filing: 20.01.2017
(51) Int. Cl.: B29C 64/35, B29C 64/245

(54) **A MODELLING HEAD FOR A THREE-DIMENSIONAL PRINTING MACHINE AND PRINTING MACHINE**
MODELLIERUNGSKOPF FÜR EINE MASCHINE ZUM DREIDIMENSIONALEN DRUCKEN UND MASCHINE ZUM DREIDIMENSIONALEN DRUCKEN
TÊTE DE MODÉLISATION POUR MACHINE D'IMPRESSION TRIDIMENSIONNELLE ET MACHINE D'IMPRESSION

(30) Priority: 22.01.2016 IT UB20160209
(43) Date of publication of application: 03.10.2018
(73) Proprietor: Sisma S.p.A., 36013 Piovene Rocchette (Vicenza) (IT)
(72) Inventor: GAMBA, Guido, 36013 Piovene Rocchette (Vicenza) (IT); BAZZUCCO, Fabiano, 36016 Piovene Rocchette (Vicenza) (IT)
(74) Representative: Lissandrini, Marco
(86) International application number: PCT/IB2017/050300
(87) International publication number: WO 2017/125882

(56) References cited:
- EP-A2- 2 523 801
- US-A1- 2005 275 129

## Description

The present invention relates to a modelling head for a three-dimensional printing machine and the three-dimensional printing machine comprising the modelling head.

In more detail, the present invention falls within the technical sector of three-dimensional printing - so-called "3D printing" - which, as is known, is a technique that allows three-dimensional objects to be produced, by solidifying and superimposing a plurality of layers obtained starting from a liquid resin, susceptible to solidification under the action of an external stimulation.

The three-dimensional printing technique can be specifically and effectively used in the realisation of prototypes for various types of industries, from the plastic to the goldsmith sector.

In accordance with the state of the art, a three-dimensional printing machine comprises a vat for containing the liquid resin and a modelling head equipped with a work surface, generally flat, adapted to support the solidified layers of the three-dimensional object to be produced. Furthermore, there is a resin stimulating device comprising a light source, typically a laser emitter, able to selectively irradiate the layer of liquid resin adjacent to the bottom of the vat, so as to solidify it. In more detail, each layer of the object is obtained by selectively stimulating the resin so as to solidify it in the points that compose a corresponding section of the object to be produced.

In accordance with a first known technique, the light source is positioned below the vat, whose bottom is appropriately transparent to the light radiation emitted by the source. In this case, the stereolithography process first of all requires the modelling head to be positioned at a distance, from the bottom of the vat, equal to the thickness of the layer to be solidified. Subsequently, the light source selectively irradiates the layer of liquid resin adjacent to the bottom of the vat, so as to solidify it. In more detail, the modelling head is configured so that the solidified layer adheres to it while, on the contrary, the bottom of the vat has a coating that reduces such adhesion. For the formation of each subsequent layer, the modelling head is moved away from the bottom of the vat, so as to make the solidified layer emerge and thus allow the necessary thickness of the liquid resin to be restored for the processing of a subsequent layer. Following this, the modelling head brings the object back into a position such that the last solidified layer is at a distance, from the bottom of the vat, equal to the thickness of the new layer to be solidified, so that the new layer solidifies adherent to the previous layer. In accordance with this first known technique, the work surface on which the object is formed faces downwards and the modelling head is, therefore, gradually raised and moved away from the vat.

In accordance with a second known technique, the light source is positioned above the vat. Therefore, instead of stimulating the layer of resin near the bottom of the tank, the surface layer of the liquid resin is irradiated. In accordance with this second known technique, the work surface on which the object is formed faces upwards and the modelling head is, therefore, gradually lowered into the vat.

At the end of the process, regardless of the type of machine used, the finished object needs to be detached from the work surface of the modelling head.

Generally, the detachment of the object is performed manually, through the use of cutting tools that are slid onto the work surface.

Disadvantageously, this operation is complex and time consuming, since it must be performed with extreme care, to prevent breaking or damaging the object just produced.

To overcome this drawback, document EP 2523801 shows a three-dimensional printing machine, more precisely, a stereolithographic machine, comprising a modelling head equipped with a work surface in which multiple grooves have been made. At the end of the process, in each of the aforementioned grooves, it is possible to insert and slide an elongated element belonging to a cleaning tool. The elongated element exerts a thrust on the three-dimensional object to cause its detachment from the work surface. Therefore, the aforementioned grooves allow the detachment of the finished object from the work surface to be facilitated. In particular, the aforementioned grooves are deeper than the thickness of the layers that compose the three-dimensional object, to prevent the grooves themselves becoming obstructed by the solidification of the first layers of the object due to processing requirements or positioning defects.

The main drawback of the modelling head shown in document EP 2523801 is that it still requires manual intervention by a specialist operator, with the consequent risk of damaging the object just formed. Furthermore, disadvantageously, it is necessary for the operator to be equipped with a specific tool, having the suitable dimensions and shape to make it insertable into the grooves made in the work surface.

Another drawback of the modelling head according to EP2523801 is that it is complicated to construct, since it requires finding a compromise on the number of grooves to be made. In fact, on one hand, a high number of grooves facilitates the detachment of the object but, on the other hand, worsens the grip of the object to the work surface. Therefore, disadvantageously, it is necessary to calibrate the number of grooves according to the type of object to be produced.

Disadvantageously, the realisation of the tool also implies some complications. First of all, the tool must be made to measure, i.e. according to the number, depth and mutual distance between the grooves. Furthermore, the tool must be made of material that is sufficiently flexible to allow the application of a gradual force on the object, but at the same time must be sufficiently stiff to guarantee the detachment of the object from the modelling head. US2005/0275129 discloses an apparatus for additive manufacturing comprising a platform with openings and a corresponding punch with projections.

In this context, the technical task underlying the present invention is to propose a modelling head for a three-dimensional printing machine, which obviates the drawbacks of the known art as mentioned above. In particular, an object of the present invention is to provide a modelling head that is able to allow the detachment of the object quickly and without the use of tools.

Another object of the present invention is to realise a modelling head that allows the detachment of the object safely, i.e. without damaging or ruining the object just formed.

Another object of the present invention is to provide a modelling head that allows the detachment of the object also by non-specialist operators, preferably also automatically.

Another object of the present invention is to provide a modelling head able to guarantee the correct positioning and correct formation of the object. In particular, it is an object of the present invention to provide a modelling head that allows both optimal grip of the object during the process and easy detachment thereof at the end of the process.

The defined technical task and the specified aims are substantially achieved by a modelling head for a three-dimensional printing machine, which head comprises the technical characteristics set out in one or more of the appended claims. The dependent claims correspond to further embodiments of a modelling head, according to the present invention.

Further characteristics and advantages of the present invention will become more apparent from the following indicative, and hence non-limiting, description of a preferred, but not exclusive, embodiment of a modelling head for a three-dimensional printing machine, as illustrated in the appended drawings, in which:
- figure 1 illustrates a perspective view of a three-dimensional printing machine that comprises a modelling head in accordance with the invention;
- figure 2 illustrates a perspective view of a modelling head according to the invention;
- figure 3 illustrates a lateral view of the modelling head shown in figure 2, in a first operating configuration;
- figure 4 illustrates a lateral view of the modelling head shown in figure 2, in a second operating configuration;
- figure 5 illustrates an exploded view of the modelling head shown in figure 2;
- figure 6 illustrates a lateral sectional view, and with some parts removed to better highlight others, of the modelling head shown in figure 3, in said first operating configuration;
- figure 7 illustrates a lateral sectional view, and with some parts removed to better highlight others, of the modelling head shown in figure 4, in said second operating configuration.

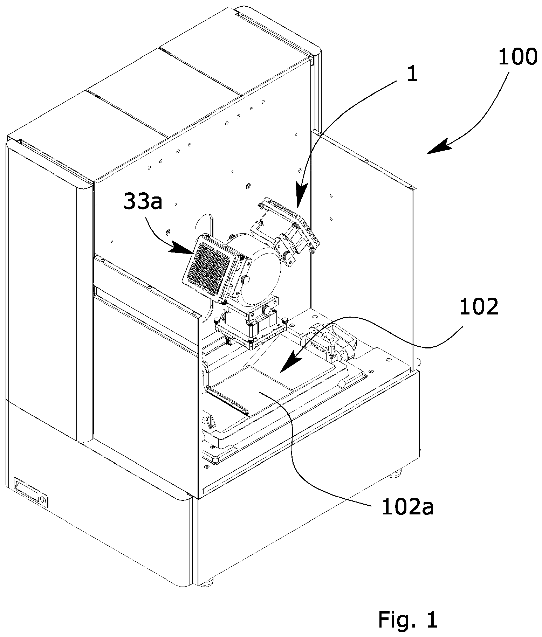

Figure 1 illustrates a three-dimensional printing machine 100 comprising a modelling head indicated overall by number 1.

The three-dimensional printing machine 100, illustrated purely by way of non-limiting example, comprises a vat 102 for containing liquid resin and is provided with at least one modelling head 1, preferably with three heads. The liquid resin, of the known type, is able to solidify under the action of radiation emitted by a light source (not shown) positioned below the vat 102, the bottom 102a of which is appropriately transparent to the radiation emitted by the light source.

In the operating conditions of the machine, each modelling head 1 is, in turn, positioned at a distance, from the bottom 102a of the vat 102, equal to the thickness of the layer to be solidified. Subsequently, the light source selectively irradiates the layer of liquid resin adjacent to the bottom 102a of the vat 102, so that said layer is solidified. In more detail, the modelling head 1 is configured so that the solidified layer adheres to it while, on the contrary, the bottom 102a of the vat 102 has a coating that reduces such adhesion. Preferably, the bottom 102a is made, or coated, with silicone material. Each modelling head 1 is then moved away from the bottom 102a of the vat 102, so as to make the solidified layer emerge and thus allow the necessary thickness of the liquid resin to be restored for the processing of a subsequent layer. Following this, each modelling head 1, during its processing turn, brings the object back into a position such that the last solidified layer is at a distance, from the bottom 102a of the vat 102, equal to the thickness of the new layer to be solidified, so that the new layer solidifies adherent to the previous layer. During processing, therefore, the modelling head 1 is gradually raised and moved away from the vat 102. Without reducing the generality of the invention, the three-dimensional printing machine which incorporates a modelling head according to the invention could even be of the type in which the processing head is gradually lowered into the vat.

In accordance with the invention, the modelling head 1 comprises a first 2 and a second 3 base body each having a respective work surface 2a, 3a. In particular, as will become clearer in the following description, an object being formed inside the machine adheres to at least one of the work surfaces of the base bodies. Preferably, an object being formed adheres alternatively to one of said work surfaces.

The base bodies 2, 3 are movable in relation to one another so that the respective work surfaces interfere with one another, therefore the formed object receives a thrust so as to become detached from the work surface 2a, 3a to which it adhered.

In more detail, the term "interfere" means all of the following operating conditions:
- the work surfaces mutually cross over;
- the work surfaces are initially aligned and, following the relative movement between base bodies, they become arranged according to staggered planes.

In accordance with a further aspect of the invention, the base bodies 2, 3 are movable in relation to one another, so that the second body 3 assumes a projecting position from the first body 2 or a recessing position into said first body 2, therefore the respective work surfaces 2a, 3a of the base bodies 2, 3 cross one another and the formed object receives a thrust so that it becomes detached from the work surface 2a, 3a to which it adhered.

In accordance with a further aspect of the invention, the base bodies 2, 3 are movable along an orthogonal direction to the respective work surfaces 2a, 3a.

With reference to the figures, the first base body 2 comprises a base wall.

In accordance with a further aspect of the invention and with reference to the figures, the second base body 3 comprises at least one insert. In accordance with such variant of the embodiment, the head 1 preferably comprises a plurality of inserts.

For clarity purposes, the numerical references 2 and 3 shall also refer hereinafter to the base wall and to the aforementioned inserts, respectively.

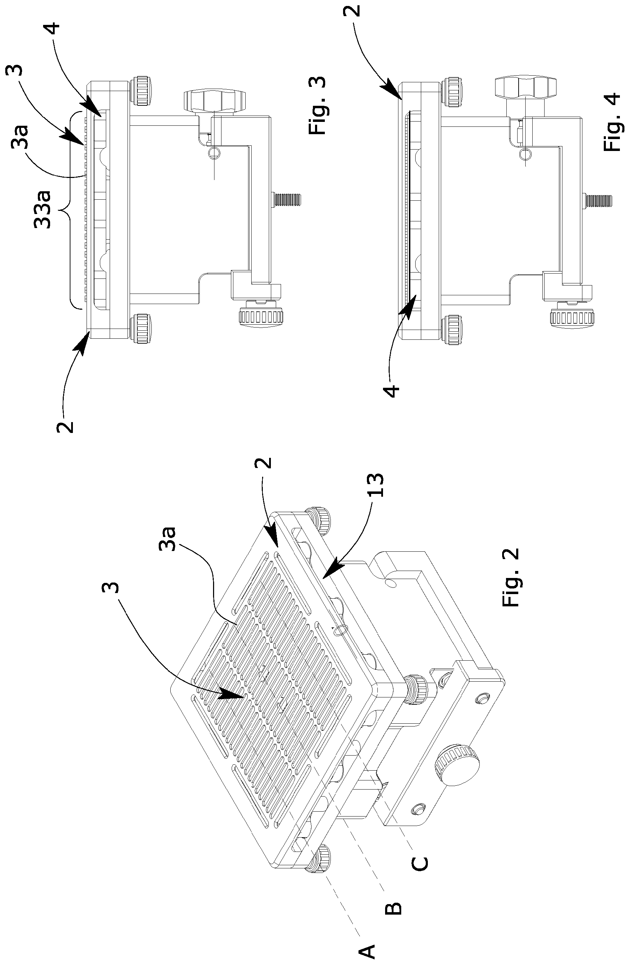

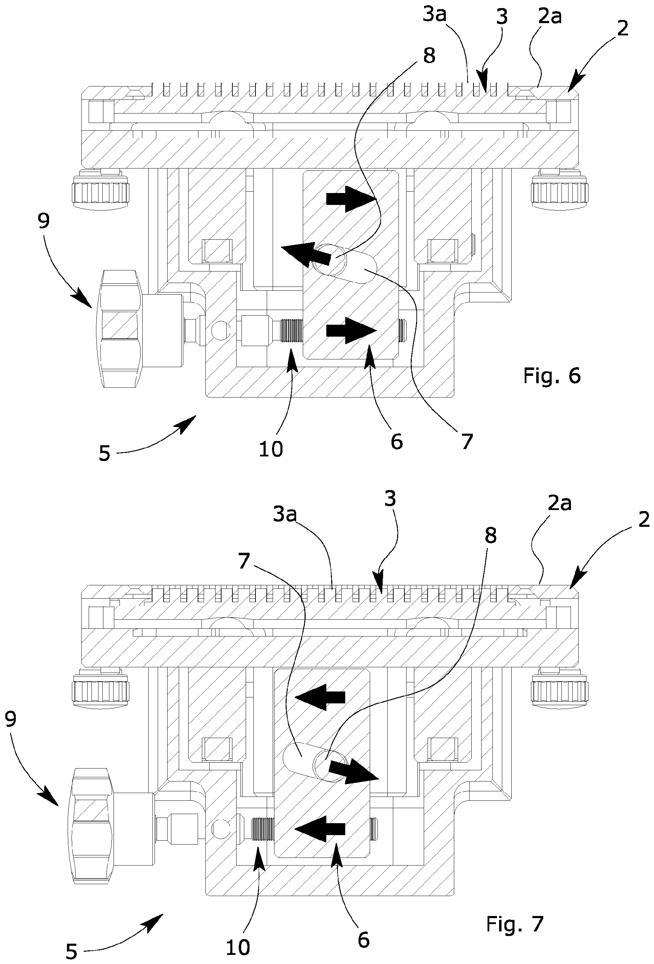

With particular reference to figures 2, 3 and 5 the modelling head 1 comprises a base wall 2 and a plurality of inserts 3 each provided with a work surface 3a and arranged in a projecting position from the base wall 2. In particular, the inserts 3 are operatively associated with one another so that the respective work surfaces 3a define an overall work surface 33a (figures 1 and 3) onto which an object being processed inside the machine 100 adheres. In accordance with the invention, the inserts are movable between an extracted operating configuration (figures 3 and 6) in which, during the object forming step, they assume the aforementioned projecting position from the base wall 2, and a retracted operating configuration (figures 4 and 7) in which, at the end of the object forming step, they assume a recessing position into the base wall 2. In this way, after the inserts 3 have been moved between the extracted and the retracted configuration, the formed object comes into contact with the base wall 2 and receives a thrust such that it becomes detached from the overall work surface 33a. In other words, according to such variant of the embodiment, the base wall 2 acts as an end stop, defining an abutment and detachment element for the object that moves following the retraction movement of the inserts.

In accordance with a further variant of the embodiment, an object being processed inside the machine adheres to the work surface 2a of the base wall 2. Such variant of the embodiment is homologous to the embodiment described above, with the difference that the inserts 3 are movable between a retracted operating configuration in which, during the object forming step, they assume a recessing position into the base wall 2, and an extracted operating configuration in which, at the end of the object forming step, they assume a projecting position from the base wall 2, therefore the work surface 3a of each insert 3 exerts a thrust on the formed object such that it becomes detached from the work surface 2a of the base wall 2. In other words, according to such variant of the embodiment, the inserts act like pusher elements for detaching the object from the work surface 2a of the base wall 2.

Therefore, advantageously, a modelling head according to the invention allows the object to be detached from the work surface without using tools.

Preferably, in the extracted position, the inserts 3 project to a height comprised between about 0.5 mm and about 1.5 mm with respect to the base wall 2.

According to a further aspect of the invention (figures 3, 4 and 5), the inserts are solidly fixed to a plate 4 that is movable with respect to the base wall 2. Preferably, according to a further aspect of the invention, the inserts are made in a single piece with the plate 4 and are protrusions thereof which extend according to predefined extension directions.

In accordance with the invention, the head 1 comprises a movement means for moving the base bodies 2, 3.

In particular, according to a variant of the embodiment shown in figures 6 and 7, the modelling head 1 comprises a movement means 5 for moving the plate 4 that supports the inserts 3.

According to an aspect of the invention, the movement means 5 comprises a slider 6 having a guide 7 within which a pin 8 solidly constrained to the plate 4 is engaged and slides. In particular, the slider 6 is movable in relation to the plate 4, so that the guide 7 can drag the pin 8 and activate a movement of the plate 4 solidly constrained to the pin itself. In more detail, the guide 7 is inclined with respect to the horizontal direction and therefore the translation movement of the slider 6 determines a movement of the pin 8 according to an inclined trajectory. In particular, the pin 8 moves with an alternative motion between at least a first operating condition (figure 6) corresponding to the extracted configuration of the inserts (figure 3) and at least a second operating condition (figure 7) corresponding to the retracted configuration of the inserts (figure 4). Preferably, the guide 7 is defined by a slot made on the slider 6.

In addition, the movement means 5 comprises control members for activating the movement of the slider 6. According to an aspect of the invention, the control members comprise a knob 9 solidly constrained to a threaded element 10, preferably a worm screw, engaged in a corresponding threaded seat made on the slider 6. Following a rotation of the knob in a first rotation direction, the threaded element rotates so that the slider 6 reaches a first end stop position corresponding to the extracted position of the inserts (figure 6). Vice versa, following a rotation of the knob in an opposite rotation direction, the threaded element 10 rotates so that the slider 6 reaches a second end stop position corresponding to the retracted position of the inserts (figure 7).

From what is stated above and with reference to the figures, the general concept is derived by which the movement means (in any variant of the embodiment) is preferably positioned on board the modelling head. Advantageously, this allows the object detachment operation to be made quicker and simpler.

According to a second aspect of the invention (not shown), the control members comprise an electric motor operatively active on the cam. According to such variant of the embodiment, the aforementioned spindle onto which the slider is engaged coincides with the electric motor shaft. In particular, the electric motor is of the brushless type and its activation is controlled by an electronic processing unit, preferably integrated thereto.

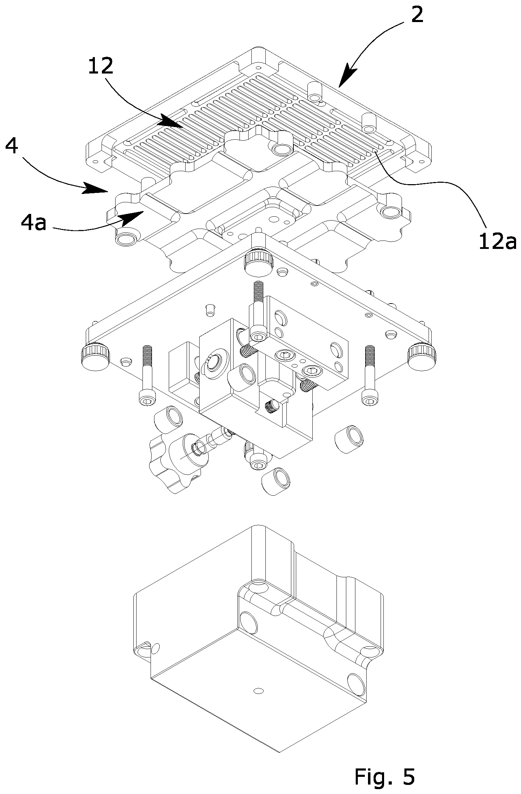

According to a further aspect of the invention (figure 5), the base wall 2 comprises a grille 12 having a plurality of access openings 12a to a housing compartment 13 (figures 2 and 6). In particular, the inserts are inserted slidably into the aforementioned access openings 12a to enter and exit from said housing compartment 13, so as to assume, respectively, the aforementioned extracted and retracted operating configurations. Preferably, each access opening 12a has an edge countershaped to a cross section of a respective insert. Advantageously, such circumstance allows infiltrations of liquid resin into the housing compartment 13 to be reduced to a minimum.

According to a further aspect of the invention, the work surface of each insert is substantially oblong shaped. Preferably, the work surface of each insert is also substantially flat.

In accordance with a further aspect of the invention (figure 2), the modelling head 1 comprises a plurality of series of inserts (marked by lines A, B, C in figure 1) organised according to parallel lines.

The operation of the invention is a direct consequence of the structural elements described above and is therefore as follows.

Before starting the object forming step, the inserts 3 are controlled so as to assume the aforementioned extracted configuration, thus being arranged in a projecting position with respect to the base wall 2. In this way, the individual work surfaces 3a of the inserts 3 cooperate to define as a whole an overall work surface 33a onto which the object to be formed inside the machine adheres.

At the end of the process, after the object is completely formed and still adhering to the overall work surface 33a, the inserts 3 are controlled so as to assume the aforementioned retracted configuration, thus being arranged in a recessing position within the base wall 2. In this way, due to the effect of the movement of the inserts 3 between the extracted position and the retracted position, the formed object comes into contact with the base wall 2, which exerts a force such that the object becomes detached from the individual work surfaces 3a and therefore also from the overall work surface. In other words, the circumstance by which each insert 3 is recessed into the base wall 2, for example by becoming housed in the compartment 13, necessarily implies that the object - still adhering to the inserts - is driven in abutment against the base wall 2, which acts as an end stop for the formed object, stopping it and hence causing its separation from the inserts, which instead continue their stroke until they are recessed into the base wall 2. Therefore, advantageously, the detachment of the object from the processing head takes place safely, without the use of tools which could compromise the integrity of the object just produced.

Another advantage of the present invention is that it allows the detachment of the object even by non-specialist operators. In fact, at the end of the process, the operator simply has to activate the movement means 5 of the plate 4 that supports the inserts 3, so that the inserts are moved to become recessed into the base wall 2, i.e. in this way the inserts assume the aforementioned retracted configuration. Even more advantageously, in the case in which the movement means 5 comprises an electric motor, the detachment of the object takes place completely automatically, without the intervention of an operator.

Advantageously, a modelling head according to the invention allows both optimal grip of the object during the process and easy detachment thereof at the end of the process. In fact, given the effectiveness of the base wall 2 to act as an end stop and detach the object, the work surface of the head can by conveniently optimised to promote the grip of the object during the forming step.

## Claims

1. A modelling head (1) for a three-dimensional printing machine (100), comprising:
- a first base body (2) having a work surface (2a);
- at least a second base body (3) having a work surface (3a), so that an object being formed inside the machine adheres to at least one of said work surfaces (2a, 3a) of the base bodies (2, 3);
- a movement means (5) for moving said base bodies (2, 3) in relation to one another, so that the second body (3) assumes a projecting position from the first base body (2) or a recessing position into said first base body (2), therefore the respective work surfaces (2a, 3a) of said bodies (2, 3) cross one another and the formed object receives a thrust so that it becomes detached from the work surface (2a, 3a) to which it adhered.

2. The head (1) according to any one of the preceding claims, wherein said base bodies (2, 3) are movable along an orthogonal direction to the respective work surfaces (2a, 3a).

3. The head (1) according to any one of the preceding claims, wherein said first base body (2) comprises a base wall.

4. The head (1) according to any one of the preceding claims, wherein said second base body (3) comprises at least one insert.

5. The head (1) according to claim 4, when dependant on claim 4, comprising a plurality of inserts (3) each provided with a work surface (3a) and arranged in a projecting position from the base wall (2), said inserts (3) being operatively associated with one another so that the respective work surfaces define an overall work surface (33a) onto which an object being processed inside the machine (100) adheres, said inserts (3) being movable between an extracted operating configuration in which, during the object forming step, they assume the aforementioned projecting position from the base wall (2), and a retracted operating configuration in which, at the end of the object forming step, they assume a recessing position into said base wall (2), therefore during the movement of the inserts (3) between said operating configurations, the formed object comes into contact with the base wall (2) and receives a thrust so that it becomes detached from the overall work surface (33a).

6. The head (1) according to claim 4, when dependant on claim 43, wherein an object being processed inside the machine adheres to the work surface (2a) of the base wall (2), said head (1) comprising a plurality of inserts (3) each provided with a work surface (3a) and arranged in a recessing position into the base wall (2), said inserts (3) being movable between a retracted operating configuration in which, during the object forming step, they assume a recessing position into the base wall (2), and an extracted operating configuration in which, at the end of the object forming step, they assume a projecting position from the base wall (2) therefore the work surface (3a) of each insert (3) exerts a thrust on the formed object so as to detach it from the work surface (2a) of the base wall (2).

7. The head (1) according to claim 5 or 6, wherein said inserts (3) are solidly fixed to a plate (4) that is movable with respect to the base wall (2).

8. The head (1) according to claim 7, wherein said inserts are made in a single piece with the plate (4) and are protrusions thereof which extend according to predefined extension directions.

9. The head (1) according to claim 1, when dependant on claim 8, comprising a slider (6) having a guide (7) within which a pin (8) slides solidly constrained to the plate (4), said slider (6) being movable in relation to the plate (4), so that the guide (7) drags the pin (8) and activates a movement of the plate (4).

10. The head (1) according to claim 9, wherein said guide (7) is inclined with respect to a horizontal direction, the movement of the slider (6) determining a movement of the pin (8) according to an inclined trajectory.

11. The head (1) according to claims 9 or 10, wherein the slider (6) is movable in alternate motion between at least a first operating condition corresponding to the extracted configuration of the inserts and at least a second operating condition corresponding to the retracted configuration of the inserts.

12. The head (1) according to any one of claims 9 to 11, comprising control members for activating the movement of the slider (6).

13. The head (1) according to claim 12, wherein the control members comprise a knob (9) solidly constrained to a threaded element (10) engaged in a corresponding threaded seat made on the slider (6), said threaded element, following a rotation of the knob in a first rotation direction, rotating so that the slider (6) reaches a first end stop position corresponding to the extracted position of the inserts; said threaded element, following a rotation of the knob in an opposite rotation direction, rotating so that the slider (6) reaches a second end stop position corresponding to the retracted position of the inserts.

14. The head (1) according to claims 5 or 6, wherein the base wall (2) comprises a grille (12) having a plurality of openings (12a) for accessing a housing compartment (13), said inserts (3) being inserted slidably into said access openings (12a) for entering and exiting from said housing compartment (13).

15. The head (1) according to claim 14, wherein each access opening (12a) has a countershaped edge to a cross section of a respective insert (3).

16. The head according to any one of the preceding claims 6 to 9 or 9 to 13, comprising a plurality of series of inserts (3) organised according to parallel lines (A, B, C).

17. A three-dimensional printing machine (100), comprising a modelling head (1) according to any one of the preceding claims.

## Patentansprüche

1. Modellierungskopf (1) für eine Maschine zum dreidimensionalen Drucken (100), umfassend:
- einen ersten Basiskörper (2) aufweisend eine Arbeitsfläche (2a);
- mindestens einen zweiten Basiskörper (3) aufweisend eine Arbeitsfläche (3a), so dass ein in der Maschine zu formender Gegenstand an mindestens einer der Arbeitsflächen (2a, 3a) der Basiskörper (2, 3) haftet;
- ein Bewegungsmittel (5) zum Bewegen der Basiskörper (2, 3) relativ zueinander, so dass der zweite Körper (3) eine von dem ersten Basiskörper (2) abstehende Position oder eine in den ersten Basiskörper (2) eingefahrene Position einnimmt, daher kreuzen sich die jeweiligen Arbeitsflächen (2a, 3a) der Körper (2, 3) und der geformte Gegenstand erhält einen Schub, so dass er sich von der Arbeitsfläche (2a, 3a), an der er haftete, trennt.

2. Kopf (1) nach einem der vorhergehenden Ansprüche, wobei die Basiskörper (2, 3) entlang einer orthogonalen Richtung zu den jeweiligen Arbeitsflächen (2a, 3a) bewegbar sind.

3. Kopf (1) nach einem der vorhergehenden Ansprüche, wobei der erste Basiskörper (2) eine Basiswand umfasst.

4. Kopf (1) nach einem der vorhergehenden Ansprüche, wobei der zweite Basiskörper (3) mindestens einen Einsatz umfasst.

5. Kopf (1) nach Anspruch 4, wenn abhängig von Anspruch 4, umfassend eine Vielzahl an Einsätzen (3), die jeweils mit einer Arbeitsfläche (3a) versehen und in einer von der Basiswand (2) abstehenden Position angeordnet sind, wobei die Einsätze (3) miteinander betriebswirksam assoziiert sind, so dass die jeweiligen Arbeitsflächen eine Gesamtarbeitsfläche (33a) definieren, an der ein in der Maschine (100) zu bearbeitender Gegenstand haftet, wobei die Einsätze (3) zwischen einer ausgefahrenen Betriebskonfiguration, in der sie während des Schritts zum Formen des Gegenstands die zuvor erwähnte von der Basiswand (2) abstehende Position einnehmen und eine zurückgezogene Betriebskonfiguration bewegbar sind, in der sie am Ende des Schritts zum Formen des Gegenstands eine in der Basiswand (2) eingefahrene Position einnehmen, daher kommt der geformte Gegenstand während der Bewegung der Einsätze (3) zwischen den Betriebskonfigurationen in Kontakt mit der Basiswand (2) und erhält einen Schub, so dass er sich von der gesamten Arbeitsfläche (33a) trennt.

6. Kopf (1) nach Anspruch 4, wenn abhängig von Anspruch 3, wobei ein in der Maschine zu bearbeitender Gegenstand an der Arbeitsfläche (2a) der Basiswand (2) haftet, wobei der Kopf (1) eine Vielzahl an Einsätzen (3) umfasst, die jeweils mit einer Arbeitsfläche (3a) versehen und in einer in der Basiswand (2) eingefahrenen Position angeordnet sind, wobei die Einsätze (3) zwischen einer zurückgezogenen Betriebskonfiguration, in der sie während des Schritts zum Formen des Gegenstands eine in der Basiswand (2) eingefahrene Position einnehmen und eine ausgefahrene Betriebskonfiguration bewegbar sind, in der sie am Ende des Schritts zum Formen des Gegenstands eine von der Basiswand (2) abstehende Position einnehmen, daher übt die Arbeitsfläche (3a) jedes Einsatzes (3) einen Schub auf den geformten Gegenstand aus, um ihn von der Arbeitsfläche (2a) der Basiswand (2) zu trennen.

7. Kopf (1) nach Anspruch 5 oder 6, wobei die Einsätze (3) fest an einer Platte (4) befestigt sind, die in Bezug auf die Basiswand (2) bewegbar ist.

8. Kopf (1) nach Anspruch 7, wobei die Einsätze einstückig mit der Platte (4) hergestellt sind und Vorsprünge davon sind, die sich nach vordefinierten Erstreckungsrichtungen erstrecken.

9. Kopf (1) nach Anspruch 1, wenn abhängig von Anspruch 8, umfassend einen Schieber (6) aufweisend eine Führung (7), innerhalb derer ein Stift (8) fest mit der Platte (4) verbunden gleitet, wobei der Schieber (6) relativ zur Platte (4) bewegbar ist, so dass die Führung (7) den Stift (8) zieht und eine Bewegung der Platte (4) aktiviert.

10. Kopf (1) nach Anspruch 9, wobei die Führung (7) in Bezug auf eine horizontale Richtung geneigt ist, wobei die Bewegung des Schiebers (6) eine Bewegung des Stifts (8) nach einer geneigten Bahn bestimmt.

11. Kopf (1) nach Anspruch 9 oder 10, wobei der Schieber (6) in einer Wechselbewegung zwischen mindestens einem ersten Betriebszustand entsprechend der ausgefahrenen Konfiguration der Einsätze und mindestens einem zweiten Betriebszustand entsprechend der zurückgezogenen Konfiguration der Einsätze bewegbar ist.

12. Kopf (1) nach einem der Ansprüche 9 bis 11, umfassend Steuerelemente zum Aktivieren der Bewegung des Schiebers (6).

13. Kopf (1) nach Anspruch 12, wobei die Steuerelemente einen Knopf (9) umfassen, der fest mit einem Gewindeelement (10) verbunden ist, das in einen entsprechenden auf dem Schieber (6) ausgebildeten Gewindesitz eingreift, wobei sich das Gewindeelement nach einer Drehung des Knopfs in einer ersten Drehrichtung dreht, so dass der Schieber (6) eine erste Endanschlagsposition erreicht, die der ausgefahrenen Position der Einsätze entspricht; wobei sich das Gewindeelement nach einer Drehung des Knopfes in eine entgegengesetzte Drehrichtung dreht, so dass der Schieber (6) eine zweite Endanschlagsposition erreicht, die der zurückgezogenen Position der Einsätze entspricht.

14. Kopf (1) nach Anspruch 5 oder 6, wobei die Basiswand (2) ein Gitter (12) aufweisend eine Vielzahl an Öffnungen (12a) zum Zugang zu einer Gehäuseunterteilung (13) umfasst, wobei die Einsätze (3) in die Zugangsöffnungen (12a) zum Ein- und Auslaufen von der Gehäuseunterteilung (13) verschiebbar eingesetzt sind.

15. Kopf (1) nach Anspruch 14, wobei jede Zugangsöffnung (12a) eine Kante aufweist, die zu einem Querschnitt eines jeweiligen Einsatzes (3) gegengeformt ist.

16. Kopf nach einem der vorhergehenden Ansprüche 6 bis 9 oder 9 bis 13, umfassend eine Vielzahl an Reihen von Einsätzen (3), die nach parallelen Linien (A, B, C) organisiert sind.

17. Maschine zum dreidimensionalen Drucken (100) umfassend einen Modellierungskopf (1) nach einem der vorhergehenden Ansprüche.

## Revendications

1. Tête de modélisation (1) pour une machine d'impression tridimensionnelle (100), comprenant :
- un premier corps de base (2) comportant une surface de travail (2a) ;
- au moins un second corps de base (3) comportant une surface de travail (3a), de sorte qu'un objet formé à l'intérieur de la machine adhère à au moins une desdites surfaces de travail (2a, 3a) des corps de base (2, 3) ;
- un moyen de déplacement (5) servant à déplacer lesdits corps de base (2, 3), en relation l'un avec l'autre, de sorte que le second corps (3) adopte une position en saillie à partir du premier corps de base (2) ou une position de renfoncement dans ledit premier corps de base (2), par conséquent, les surfaces de travail (2a, 3a) respectives desdits corps (2, 3) s'interfèrent l'une et l'autre et l'objet formé reçoit une poussée lui permettant de se détacher de la surface de travail (2a, 3a) à laquelle il adhère.

2. Tête (1) selon l'une quelconque des revendications précédentes, dans laquelle lesdits corps de base (2, 3) sont mobiles le long d'une direction orthogonale par rapport aux surfaces de travail (2a, 3a) respectives.

3. Tête (1) selon l'une quelconque des revendications précédentes, dans laquelle ledit premier corps de base (2) comprend une cloison de base.

4. Tête (1) selon l'une quelconque des revendications précédentes, dans laquelle ledit second corps de base (3) comprend au moins un insert.

5. Tête (1) selon la revendication 4, lorsqu'elle dépend de la revendication 4, comprenant une pluralité d'inserts (3) chacun pourvu d'une surface de travail (3a) et disposé dans une position en saillie à partir de la cloison de base (2), lesdits inserts (3) étant fonctionnellement associés les uns aux autres de manière à ce que les surfaces de travail respectives définissent une surface de travail (33a) globale sur laquelle adhère un objet étant traité à l'intérieur de la machine (100), lesdits inserts (3) étant mobiles entre une configuration de fonctionnement extraite dans laquelle, lors de l'étape de formation de l'objet, ils adoptent la position en saillie susmentionnée à partir de la cloison de base (2), et une configuration de fonctionnement rétractée dans laquelle, au terme de l'étape de formation de l'objet, ils adoptent une position de renfoncement dans ladite cloison de base (2), par conséquent, lors du déplacement des inserts (3) entre lesdites configurations de fonctionnement, l'objet formé se met en contact avec la cloison de base (2) et reçoit une poussée lui permettant de se détacher de la surface de travail (33a) globale.

6. Tête (1) selon la revendication 4, lorsqu'elle dépend de la revendication 3, dans laquelle un objet étant traité à l'intérieur de la machine adhère à la surface de travail (2a) de la cloison de base (2), ladite tête (1) comprenant une pluralité d'inserts (3), chacun pourvu d'une surface de travail (3a) et disposé dans une position de renfoncement dans la cloison de base (2), lesdits inserts (3) étant mobiles entre une configuration de fonctionnement rétractée dans laquelle, lors de l'étape de formation de l'objet, ils adoptent une position de renfoncement dans la cloison de base (2), et une configuration de fonctionnement extraite dans laquelle, au terme de l'étape de formation de l'objet, ils adoptent une position en saillie à partir de la cloison de base (2), par conséquent, la surface de travail (3a) de chaque insert (3) exerce une poussée sur l'objet formé de manière à le détacher de la surface de travail (2a) de la cloison de base (2).

7. Tête (1) selon la revendication 5 ou 6, dans laquelle lesdits inserts (3) sont solidement fixés à une plaque (4) étant mobile par rapport à la cloison de base (2).

8. Tête (1) selon la revendication 7, dans laquelle lesdits inserts forment un seul tenant avec la plaque (4) et sont les saillies de celle-ci se prolongeant selon des directions d'extension prédéfinies.

9. Tête (1) selon la revendication 1, lorsqu'elle dépend de la revendication 8, comprenant un coulisseau (6) comportant un guide (7) à l'intérieur duquel une cheville (8) coulisse de façon solidaire par rapport à la plaque (4), ledit coulisseau (6) étant mobile par rapport à la plaque (4) de sorte que le guide (7) tire la cheville (8) et active un déplacement de la plaque (4) .

10. Tête (1) selon la revendication 9, dans laquelle ledit guide (7) est incliné par rapport à une direction horizontale, le déplacement du coulisseau (6) déterminant un mouvement de la cheville (8) selon une trajectoire inclinée.

11. Tête (1) selon la revendication 9 ou 10, dans laquelle le coulisseau (6) est mobile selon un déplacement alterné entre au moins une première condition de fonctionnement correspondant à la configuration extraite des inserts et au moins une seconde condition de fonctionnement correspondant à la configuration rétractée des inserts.

12. Tête (1) selon l'une quelconque des revendications de 9 à 11, comprenant des organes de commande servant à activer le déplacement du coulisseau (6).

13. Tête (1) selon la revendication 12, dans laquelle les organes de commande comprennent un bouton (9) solidaire d'un élément fileté (10) se mettant en prise avec un siège fileté correspondant réalisé sur le coulisseau (6), ledit élément fileté, suite à une rotation du bouton dans une première direction de rotation, tournant de sorte que le coulisseau (6) atteigne une première position de butée d'extrémité correspondant à la position extraite des inserts ; ledit élément fileté, suite à une rotation du bouton dans une direction de rotation opposée, tournant de sorte que le coulisseau (6) atteigne une seconde position de butée d'extrémité correspondant à la position rétractée des inserts.

14. Tête (1) selon la revendication 5 ou 6, dans laquelle la cloison de base (2) comprend une grille (12) comportant une pluralité d'ouvertures (12a) pour accéder à un compartiment de logement (13), lesdits inserts (3) étant introduits de façon coulissante dans lesdites ouvertures (12a) d'accès pour entrer et sortir dudit compartiment de logement (13).

15. Tête (1) selon la revendication 14, dans laquelle chaque ouverture (12a) d'accès comporte un bord contrefaçonné à une section transversale d'un insert (3) respectif.

16. Tête selon l'une quelconque des revendications précédentes de 6 à 9 ou de 9 à 13, comprenant une pluralité de séries d'inserts (3) organisées selon des lignes parallèles (A, B, C).

17. Machine d'impression tridimensionnelle (100) comprenant une tête de modélisation (1) selon l'une quelconque des revendications précédentes.
